# EUROPÄISCHE PATENTSCHRIFT

(11) **EP 3 003 879 B1**
(45) Veröffentlichungstag und Bekanntmachung des Hinweises auf die Patenterteilung: **08.11.2017**
(21) Anmeldenummer: 14720897.9
(22) Anmeldetag: 25.04.2014
(51) Int. Cl.: B65G 47/29, B65G 47/84, B65C 9/40, B67C 3/00

(54) **VERFAHREN ZUR BEHANDLUNG VON BEHÄLTERN SOWIE BEHÄLTERBEHANDLUNGSMASCHINE**
METHOD AND MACHINE FOR TREATING CONTAINERS
PROCÉDÉ ET MACHINE DE TRAITEMENT DE RÉCIPIENTS

(30) Priorität: 28.05.2013 DE 102013105460
(43) Veröffentlichungstag der Anmeldung: 13.04.2016
(73) Patentinhaber: KHS GmbH, 44143 Dortmund (DE)
(72) Erfinder: HÄRTEL, Manfred, 67685 Weilerbach (DE); FAHLDIECK, Andreas, 55743 Idar-Oberstein (DE)
(86) Internationale Anmeldenummer: PCT/EP2014/001113
(87) Internationale Veröffentlichungsnummer: WO 2014/191073

(56) Entgegenhaltungen:
- EP-A1- 0 403 793
- EP-A2- 2 441 563
- WO-A1-99/03766
- DE-A1- 1 532 585
- DE-A1- 2 513 373
- DE-A1-102008 008 528

## Beschreibung

Die Erfindung bezieht sich auf ein Verfahren gemäß Oberbegriff Patentanspruch 1 sowie auf eine Behälterbehandlungsmaschine gemäß Oberbegriff Patentanspruch 8.

Behälterbehandlungsmaschinen im Sinne der vorliegenden Erfindung sind solche, bei denen an einem umlaufend antreibbaren Transportelement mehrere in Transportrichtung dieses Transportelementes aufeinanderfolgende Behandlungsstationen oder -positionen zum Behandeln von Behältern gebildet sind. Behälterbehandlungsmaschinen im Sinne der vorliegenden Erfindung sind insbesondere auch solche, bei denen das die Behandlungspositionen aufweisende Transportelement von einem um eine vertikale Maschinenachse umlaufend antreibbaren Rotor gebildet ist.

Die Behälterbehandlungsmaschine kann der jeweiligen Behandlung angepasst in unterschiedlichster Weise ausgebildet sein, beispielsweise als Füllmaschine zum Füllen von Behältern, als Verschließmaschine oder Verschließer zum Verschließen von gefüllten Behältern mit jeweils einem geeigneten Behälterverschluss, als Inspektionsmaschine zum Inspizieren von leeren Behältern vor dem Füllen und/oder zum Inspizieren von gefüllten Behältern, als Etikettiermaschine zum Etikettieren von Behältern, als Behälter mit Druckmaschine zum Aufbringen von von Druckbildern gebildeten Ausstattungen auf Behälter, als Maschine zum Reinigen und/oder Sterilisieren von Behältern usw.

"Behälter" sind im Sinne der Erfindung insbesondere Dosen, Flaschen, Tuben, Pouches, jeweils aus Metall, Glas und/oder Kunststoff, aber auch andere Packmittel, insbesondere auch solche die zum Abfüllen von pulverförmigen, granulatartigen, flüssigen oder viskosen Produkten geeignet sind.

Bei der Vielzahl der an dem umlaufenden Transportelement oder Rotor einer Behälterbehandlungsmaschine vorgesehenen Behandlungspositionen lässt sich grundsätzlich nicht vermeiden, dass während eines laufenden Betriebes an einer oder auch an mehreren Behandlungspositionen ein Defekt auftritt, beispielsweise an einer als Füllposition ausgebildeten Behandlungsposition einer Füllmaschine durch geplatzte Behälter, durch ein Fehlverhalten eines dortigen Füllelementes usw., sodass es an dieser gestörten Behandlungspositionen zu einer fehlerhaften oder unvollständigen Behandlung und/oder zu einer Behandlung kommt, die einer geforderten Behandlungsqualität nicht entspricht.

Schon aus Gründen einer rationalen Fertigung ist es bisher üblich, bei einem Auftreten eines Defekts in einer Behandlungsposition einer Behälterbehandlungsmaschine, die noch dazu mit weiteren Behandlungsmaschinen in einer Gesamtanlage vorgesehen und mit diesen zusammenarbeitet, diesen Defekt zunächst zu ignorieren und ohne Abschalten der Anlage diejenigen Behälter, die an der gestörten Behandlungsposition behandelt wurden, beispielsweise unzureichend gefüllt und/oder fehlerhaft etikettiert wurden usw. als fehlerhafte Behälter aus der Anlage auszuschleusen. Obwohl diese übliche Vorgehensweise gegenüber einem ungeplanten Maschinenstillstand und einer Reparatur von ungewisser Dauer der fehlerhaften Behandlungsposition die wirtschaftlichere Lösung darstellt, werden die durch die fehlerhaften Behälter erzeugten Kosten dennoch als Nachteil angesehen.

Aus der DE 10 2008 008 528 A1 ist dabei ein Verfahren zum Behandeln von Behältern gemäß dem Oberbegriff des Patentanspruches 1 bekannt geworden.

Weiterhin ist aus der EP 0 403 793 A1 eine Bremsvorrichtung für auf Gefässförderern transportierten Gefäßen bekannt geworden, die aus einem im Wesentlichen parallel zur Gefäßförderrichtung bewegbaren Sperrkörper besteht, welcher nach Ablauf einer festgelegten Verzögerungsstrecke eine Bremswirkung gegen die Gefäße bewirkt. Die EP 0 403 791 A1 sieht dabei insbesondere vor, dass der Sperrkörper beabstandet zur einer nachfolgenden Einteilvorrichtung die Gefäße wieder frei gibt.

Aufgabe der Erfindung ist es, ein im Vergleich zum Stand der Technik verbessertes Verfahren zum Behandeln von Behältern bereitzustellen, bei dem Störungen der Anlage vermieden werden und ein sicherer kontinuierlicher Betrieb gewährleistet wird. Zur Lösung dieser Aufgabe ist ein Verfahren entsprechend dem Patentanspruch 1 ausgebildet. Eine Behälterbehandlungsmaschine ist Gegenstand des Patentanspruchs 8.

Die Erfindung geht davon aus, dass jeder Position des Behälterstromes auf der Transportstrecke des Behältereinlaufs zu jedem Zeitpunkt im normalen störungsfreien Betrieb eine bestimmte Behandlungsposition am umlaufenden Transportelement der Behälterbehandlungsmaschine, beispielsweise am dortigen Rotor eindeutig zugeordnet ist. Im Falle einer nicht zu verwendenden und somit auch nicht zu belegenden, beispielsweise defekten Behandlungsposition ist es daher möglich, in dem Behälterstrom auf der Transportstrecke des Behältereinlaufs eine einem Behälter entsprechende Lücke so zu erzeugen dass diese Lücke und nicht ein Behälter an die nicht zu belegende Behandlungsposition übergeben wird. Gleiche gilt analog für zwei oder mehr als zwei in Transportrichtung des Transportelementes aufeinander folgende nicht zu belegende oder defekte Behandlungspositionen, wobei dann eine diesen Behandlungspositionen entsprechende Lücke im Behälterstrom auf der Transportstrecke des Behältereinlaufs erzeugt wird.

Der wesentliche Aspekt des erfindungsgemäßen Verfahrens zum Behandeln von Behältern ist dabei darin zu sehen, dass das in seiner Rückhalteposition befindliche Rückhalteelement nach Ausbildung der Lücke mit dem Behälterstrom auf der Transportstrecke unter Abstützung des Behälters mitbewegt wird, der bezogen auf die Transportrichtung der Transportstrecke auf die Lücke folgt, und zwar bis an einen Bereich eines Einlaufs einer Einrichtung, mit der die Behälter auf einen dem Teilungsabstand der Behandlungspositionen entsprechenden Behälterabstand gebracht werden.

DerAusdruck" im Wesentlichen" bzw. "etwa" bzw. "ca." bedeutet im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen.

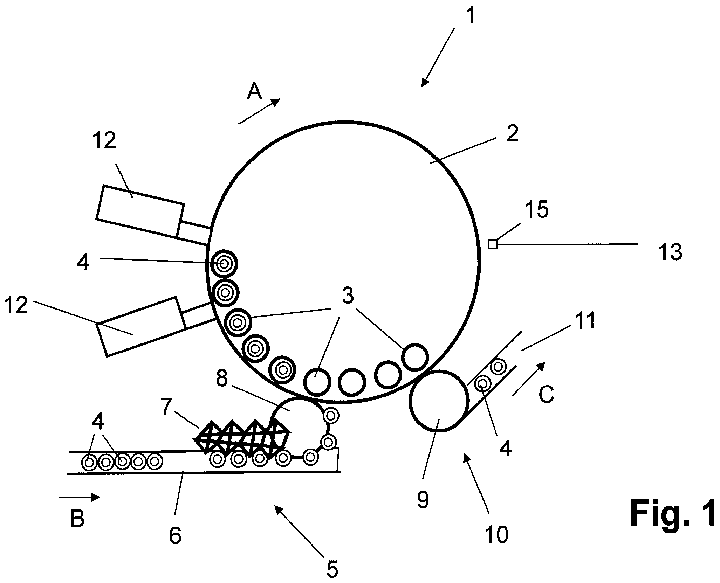

- Fig. 1: in schematischer Darstellung und in Draufsicht eine Behälterbehandlungsmaschine umlaufender Bauart;
- Fig. 2 und 3: in vereinfachter schematischer Darstellung und in Draufsicht den Behältereinlauf der Behälterbehandlungsmaschine der Figur 1 in verschiedenen Betriebszuständen;
- Fig. 4 und 5: Darstellungen ähnlich den Figuren 2 und 3 bei einer weiteren Ausführungsform der Erfindung.

Die in den Figuren allgemein mit 1 bezeichnete Behälterbehandlungsmaschine umlaufender Bauart umfasst u.a. einen um eine vertikale Maschinenachse in Richtung des Pfeils A umlaufend antreibbaren Rotor 2, an dessen Umfang in gleichmäßigen Winkelabständen um die vertikale Maschinenachse versetzt mehrere Behandlungspositionen 3 zur Aufnahme jeweils eines zu behandelnden Behälters 4 vorgesehen sind, der mit seiner Behälterachse in vertikaler Richtung, d.h. parallel oder im Wesentlichen parallel zur Maschinenachse orientiert ist.

Die zu behandelnden Behälter 4 werden den Behandlungspositionen 3 jeweils einzeln über einen Behältereinlauf 5 zugeführt, und zwar in einem Behälter- oder Achsabstand, der gleich dem Teilungsabstand ist, den die Behandlungspositionen 3 am Umfang des Rotors 2 voneinander aufweisen. Im Detail umfasst der Behältereinlauf 5 bei der dargestellten Ausführungsform u.a. eine von einem Transporteur gebildete Transportstrecke 6, die bei der dargestellten Ausführungsform geradlinig ausgebildet ist und auf der die Behälter 4 in einer Transportrichtung B als einspuriger Behälterstrom zugeführt werden, in welchem die Behälter 4 im normalen, störungsfreien Betrieb der Behälterbehandlungsmaschine 1 und sämtlicher Behandlungspositionen 3 unmittelbar aneinander anschließen. Der Behältereinlauf 5 umfasst weiterhin eine Einteileinheit in Form einer Einteilschnecke 7, mit der die Behälter 4 von ihrem ursprünglichen Achsabstand, der beispielsweise dem Behälterdurchmesser oder im Wesentlichen dem Behälterdurchmesser entspricht auf den Teilungsabstand gebracht werden. Weiterhin umfasst der Behältereinlauf 5 auch einen Transportstern 8, mit dem die Behälter 4 mit Teilungsabstand an die Behandlungspositionen 3 übergeben werden.

Die behandelten Behälter werden den Behandlungspositionen 3 an einem von einem Transportstern 9 gebildeten Behälterauslauf 10 entnommen und auf einem äußeren Transporteur 11 in einer Transportrichtung C einer weiteren Verwendung und/oder Behandlung zugeführt. Die Behandlung der Behälter 4 erfolgt auf dem Winkelbereich der Drehbewegung A des Rotors 2 zwischen den Behältereinlauf 5 und dem Behälterauslauf 10. Bei der dargestellten Ausführungsform ist die Behälterbehandlungsmaschine als Etikettiermaschine ausgebildet, bei der die auf den Behandlungspositionen 3 angeordneten Behälter 4 an Etikettieraggregaten 12 vorbei bewegt werden. Die Behälterbehandlungsmaschine kann aber auch für eine andere Art der Behandlung der Behälter an den Behandlungspositionen 3 ausgebildet sein, beispielsweise als Behälterbedruckmaschine zum Bedrucken der Behälter 3, als Füllmaschine, als Verschließmaschine, als Inspektor, als Maschine zum Reinigen und/oder Sterilisieren der Behälter 4 usw.

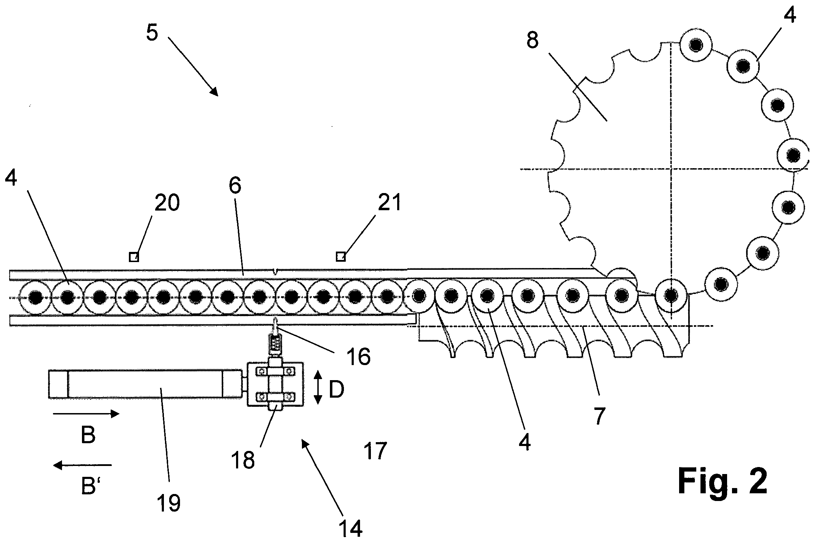

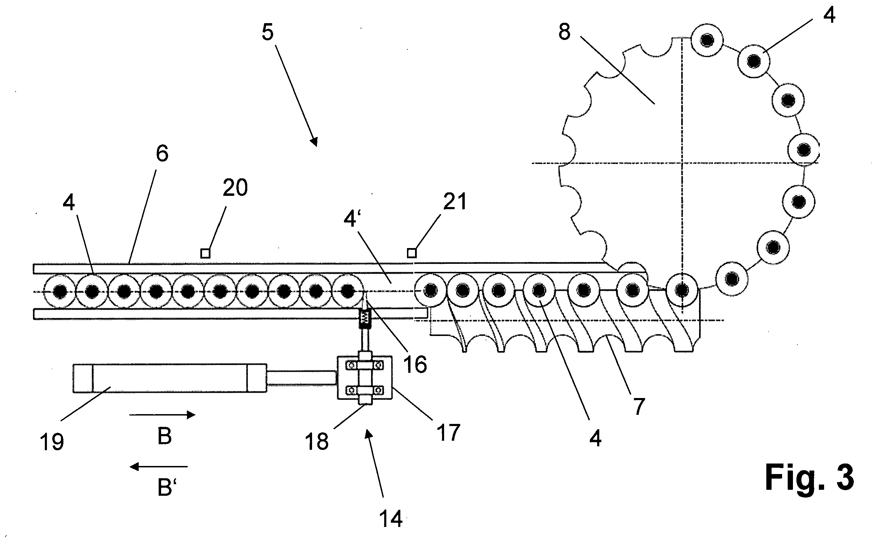

Die Besonderheit der Behälterbehandlungsmaschine 1 besteht darin, dass entsprechend den Figuren 2 und 3 am Behältereinlauf 5 und in Transportrichtung vor der Einteilschnecke 7 eine von einem Prozessrechner 13 der Behälterbehandlungsmaschine 1 oder einer diese Maschine aufweisenden Anlage gesteuerte Einrichtung 14 vorgesehen ist, mit der gezielt und gesteuert Lücken in dem an die Behandlungspositionen 3 weitergeleiteten Behälterstrom derart erzeugt werden, dass hierbei an eine nicht zu besetzende, beispielsweise defekte Behandlungsposition 3 kein Behälter 4 weitergeleitet wird. Die Einteilschnecke 7 sowie die Transportsterne 8 und 9 sind synchron mit dem Rotor 2 angetrieben.

Die Einheit 14 und deren Steuerung durch den Rechner 13 machen dabei von dem Umstand Gebrauch, dass dem Rechner 13 aufgrund beispielsweise eines von einem Sensor 15 gelieferten Signals die jeweilige Drehstellung des Rotors 2 bekannt ist und der Rechner 13 damit auch für jeden Behälter 4 im Behälterstrom am Behältereinlauf 5 diejenige Behälterbehandlungsposition 3 errechnen kann, an die dieser der Behälter 4 übergeben wird. Soll eine Behandlungsposition 3 nicht mit einem Behälter besetzt werden, da sie gestört ist, so steuert der Rechner 13 die Einrichtung 14 derart an, dass der normalerweise an diese nicht zu besetzende Behandlungsposition 3 übergebene Behälter 4 vorzugsweise in Transportrichtung B noch vor der Einteilschnecke 7 zurückgehalten und anstelle dieses Behälters 4 in dem der Einteilschnecke 7 zugeführten Behälterstrom eine Lücke 4' erzeugt wird, die einem Behälter 4 entspricht, sodass schließlich an die gestörte Behandlungsposition 3 kein Behälter weitergeleitet wird.

Für diese Funktion umfasst die Einrichtung 14 ein bei der dargestellten Ausführungsform fingerartig ausgebildetes Rückhalteelement 16 auf einem Schlitten 17. Durch eine Betätigungseinrichtung 18 ist das Rückhalteelement 16 horizontal oder im Wesentlichen horizontal und senkrecht zur Transportrichtung B zwischen einer nicht wirksamen Position bzw. Anfangsposition, in der es sich außerhalb der Bewegungsbahn der Behälter 4 seitlich vom Transportelement 6 befindet, und einer wirksamen Position bewegbar, in der das Rückhalteelement 16 in die Bewegungsbahn der Behälter 4 auf der Transportstrecke 6 hineinreicht (Doppelpfeil D). Durch eine Betätigungseinrichtung 19 ist der Schlitten 17 zusammen mit dem Rückhaltelement 16 in Transportrichtung B sowie entgegen der Transportrichtung B gesteuert bewegbar, wie dies in den Figuren 2 und 3 jeweils mit dem Pfeil B' angedeutet ist, und zwar zwischen einer Ausgangsposition, in der der Schlitten 17 und damit auch das Rückhalteelement 16 in Transportrichtung B einen größeren Abstand von der Einteilschnecke 7 aufweist, und einer Endposition, in der der Schlitten 17 und damit auch das Rückhalteelement 16 einen geringeren Abstand von der Einteilschnecke 7 aufweisen.

Gesteuert durch den Rechner 13 sind folgende Arbeitsweisen der Rückhalteeinrichtung 14 möglich:
Ist jede Behandlungsposition 3 mit einem Behälter 4 zu belegen, d.h. liegt beispielsweise an keiner der Behandlungspositionen 3 eine Störung vor, so befinden sich der Schlitten 17 und auch das Rückhalteelement 16 jeweils in ihrer Ausgangsposition, sodass der einspurige und dicht gedrängte Behälterstrom unbeeinflusst durch die Rückhalteeinheit 14 an die Einteilschnecke 7 und über den Transportstern 8 an die Behandlungspositionen 3 geleitet wird.

Soll eine bestimmte Behandlungsposition 3 nicht belegt werden, d.h. liegt an dieser Behandlungsposition 3 beispielsweise eine Störung vor, so bestimmt der Rechner 13 denjenigen Behälter 4 auf der Transportstrecke 6, der normalerweise dieser Behandlungsposition 3 zugeführt würde. Zum Rückhalten dieses Behälters bzw. zur Bildung einer diesem Behälter 4 entsprechenden Lücke 4' im Behälterstrom wird dann zunächst der Schlitten 17 mit dem Rückhalteelement 16 durch das Betätigungselement 19 auf die Transportgeschwindigkeit der Transportstrecke 6 gebracht und zwar derart, dass sich das Rückhalteelement 16 schließlich synchron mit dem Behälterstrom auf der der Transportstrecke 6 mitbewegt und sich vor demjenigen Behälter 4 befindet, der rückgehalten bzw. nicht an die Behandlungsposition 3 übergeben werden soll. Im Anschluss daran wird das Rückhalteelement 16 durch das Betätigungselement 18 in den Behälterstrom vor dem zurück zu haltenden Behälter 4 hineinbewegt, so dass es gegen die bezogen auf die Transportrichtung B vordere Seite diese Behälters 4 anliegt. Im Anschluss daran wird die Bewegung des Schlittens 17 in Transportrichtung B solange verlangsamt, bis eine einem Behälter 4 entsprechende Lücke 4' im Behälterstrom erzeugt ist. Nach dieser Lückenbildung wird das Rückhaltelement 16 relativ zum Schlitten 17 in seine nicht wirksame Ausgangsstellung zurückbewegt und dann auch der Schlitten 17 mit dem Betätigungselement 19 entgegen der Transportrichtung B in die Ausgangsposition zurückbewegt. Erfindungsgemäß erfolgt die Steuerung der Einheit 14 derart, dass nach der Lückenbildung der Schlitten 17 bei weiterhin in der wirksamen Stellung befindlichem Rückhalteelement 16 in Transportrichtung B erneut auf die Transportgeschwindigkeit der Transportstrecke 6 beschleunigt wird und das Rückhalteelement 16 bis unmittelbar an die Einteilschnecke 7 bewegt wird, sodass der in Transportrichtung B unmittelbar auf die erzeugte Lücke 4' folgende Behälter 4 bis unmittelbar an die Einteilschnecke 7 durch das Rückhalteelement 16 abgestützt ist. Erst im Einlauf der Einteilschnecke 7 wird das Rückhalteelement 16 in seine nicht wirksame Position und dann der Schlitten 17 in seine Ausgangsposition zurückbewegt. Es versteht sich, dass für die Steuerung der Einheit 14 weitere die Behälter 4 auf der Transportstrecke 6 erfassende sowie die Lückenbildung überwachende und dem Rechner 13 zugeordnete Sensoren 20 und 21 vorgesehen sind.

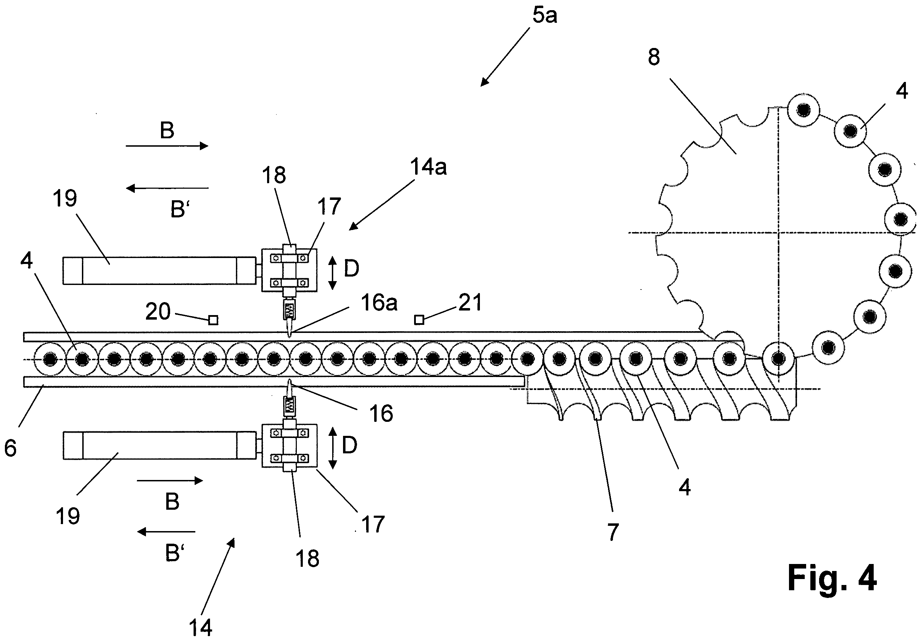

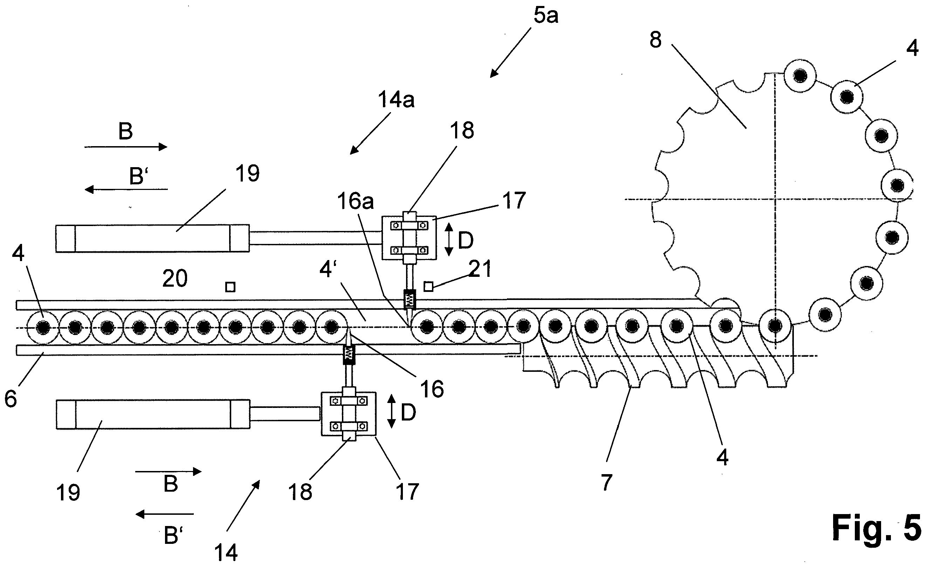

Die Figuren 4 und 5 zeigen als weitere Ausführungsform einen Behältereinlauf 5a, der sich vom Behältereinlauf 5 dadurch unterscheidet, dass zusätzlich zu der Rückhalteeinheit 14, die in gleicher Weise wie vorstehend beschrieben gesteuert wird, eine weitere Einheit 14a vorgesehen ist, die hinsichtlich ihres Aufbaus der Einheit 14 entspricht und deren dem Rückhalteelement 16 entsprechendes Element 16 a als Abstützelement wirkt. Beide Einheiten 14 und 14a sind an einander gegenüberliegenden Seiten der Transportstrecke 6 und in Transportrichtung B vor der Einteilschnecke 7 angeordnet. Weiterhin ist die Anordnung so getroffen, dass sich im Ausgangszustand bzw. in der Ausgangsposition der beiden Einheiten 14 und 14a (Figur 4) das Rückhalteelemente 16 und das Abstützelement 16a unmittelbar einander gegenüberliegend an der Transportstrecke 6 vorgesehen sind. Im Falle einer Lückenbildung zur Vermeidung der Übergabe eines Behälters 4 an eine nicht zu belegende, z.B. defekte Behälterposition 3 wird auch der Schlitten 17 und damit das Abstützelement 16a der Einheit 14a mit dem Betätigungselement 19 auf die Transportgeschwindigkeit der Transportstrecke 6 beschleunigt und dann das Abstützelement 16a mit dem Betätigungselement 18 in den Behälterstrom vor dem zurückzuhaltenden Behälter 4 bzw. vor der zu bildenden Lücke 4' eingeführt. Im Gegensatz zu dem Einheit 14 wird aber die Geschwindigkeit des Schlittens 17 der Einheit 14a nicht reduziert, sodass das Abstützelement 16a der Einheit 14 den bezogen auf die Transportrichtung B letzten Behälter 4 vor der sich bildenden Lücke 4' abstützt bzw. gegen Umfallen sichert, wie dies in der Figur 5 dargestellt ist, und zwar an seiner der Lücke 4' zugewandten Seite bevorzugt solange, bis dieser Behälter in die Einteilschnecke 7 eingelaufen ist. Erst dann werden zunächst das Abstützelement 16a und anschließend auch der Schlitten 17 in die Ausgangsposition (Figur 4) zurückbewegt.

Die Erfindung wurde voranstehend an Ausführungsbeispielen beschrieben. Es versteht sich, dass Änderungen sowie Abwandlungen möglich sind. So ist es beispielsweise auch möglich, dass die Einheiten 14 und 14a an derselben Seite der Transportstrecke 6 angeordnet sind, wobei in diesem Fall die Einheiten 14 und 14a vorzugsweise übereinander angeordnet sind.

### Bezugszeichenliste

- 1: Behälterbehandlungsmaschine
- 2: Rotor
- 3: Behandlungsposition
- 4: Behälter
- 4': Lücke
- 5: Behältereinlauf
- 6: Transportstrecke
- 7: Einteilschnecke
- 8,9: Transportstern
- 10: Behälterauslauf
- 11: Transporteur
- 12: Etikettieraggregat
- 13: Rechner
- 14, 14a: Rückhalte- und/oder Abstützeinheit
- 15: Sensor
- 16: Behälterrückhalteelement
- 16a: Abstützelement
- 17: Schlitten
- 18, 19: Betätigungselement
- 20, 21: Sensor
- B: Umlauf- oder Drehrichtung des Rotors 2
- B: Transportrichtung der Transportstrecke 6
- B': Rückhub des Schlittens 17
- C: Transportrichtung des Transporteurs 11
- D: Bewegung des Behälterrückhalteelementes 16 oder des Abstützelementes 16a

## Patentansprüche

1. Verfahren zum Behandeln von Behältern (4) in einer Behälterbehandlungsmaschine (1) mit mehreren an einem umlaufenden Transportelement (2) gebildeten und in einem Teilungsabstand von einander angeordneten Behandlungspositionen (3) und mit einem eine Transportstrecke (6) aufweisenden Behältereinlauf (5) zum Zuführen der Behälter (4) jeweils einzeln an eine Behandlungsposition (3), wobei die Behälter auf der Transportstrecke (6) des Behältereinlauf (5) einen Behälterstrom derart bilden, dass die Position jedes Behälters in dem Behälterstrom einer bestimmten Behandlungsposition (3) am Transportelement (2) zugeordnet ist,
bei dem zur Vermeidung der Übergabe von Behältern (4) an wenigstens eine von einer Behalterbehandlung ausgeschlossenen, mit einem Behälter (4) nicht zu belegenden Behandlungsposition (3) der jeweilige dieser Behandlungsposition (3) durch seine Position im Behälterstrom zugeordnete Behälter (4) an der Transportstrecke (6) zur Ausbildung einer wenigstens einem Behälter entsprechenden Lücke (4') in dem Behälterstrom zurückgehalten wird, sodass der betreffende Behälter (4) an eine Behandlungsposition (3) übergeben wird, die in Transportrichtung (A) des Transportelementes (2) auf die wenigstens eine nicht zu belegende Behandlungsposition (3) nachfolgt,
bei dem die Ausbildung der Lücke (4') unter Verwendung wenigstens eines Rückhalteelementes (16) erfolgt, welches aus einer Ausgangsposition außerhalb der Bewegungsbahn der Behälter (4) auf der Transportstrecke (6) in eine Rückhalteposition bewegbar ist, in der es den bezogen auf die Transportrichtung (B) der Transportstrecke (6) auf die zu bildende Lücke (4') folgenden Behälter (4) und die diesem folgenden Behälter (4) des Behälterstroms zumindest bis zur vollständigen Ausbildung dieser Lücke (4') zurückhält oder abbremst.
**dadurch gekennzeichnet,**
**dass** das in seiner Rückhalteposition befindliche Rückhalteelement (16) nach Ausbildung der Lücke (4') mit dem Behälterstrom auf der Transportstrecke (6) unter Abstützung des Behälters (4) mitbewegt wird, der bezogen auf die Transportrichtung (B) der Transportstrecke (6) auf die Lücke folgt, und zwar bis an einen Bereich eines Einlaufs einer Einrichtung (7), mit der die Behälter (4) auf einen dem Teilungsabstand der Behandlungspositionen (3) entsprechenden Behälterabstand gebracht werden.

2. Verfahren nach Anspruch 1, **dadurch gekennzeichnet, dass** die wenigstens eine nicht zu belegenden Behandlungsposition eine gestörte oder verschmutzte oder defekte Behandlungsposition (3) ist.

3. Verfahren nach Anspruch 1 oder 2, **dadurch gekennzeichnet, dass** zur Ausbildung der jeweiligen Lücke (4') das Rückhalteelement (16) aus einer Ausgangsposition zunächst in Transportrichtung (B) der Transportstrecke (6) auf die Transportgeschwindigkeit dieser Transportstrecke beschleunigt, anschließend in seine Rückhalteposition bewegt wird und dass dann zur Ausbildung der Lücke (4') die Vorwärtsbewegung des Rückhalteelementes (16) verlangsamt und dadurch zur Ausbildung der Lücke (4') der im Behälterstrom auf die Lücke folgende Behälter und der an diesen anschließende Behälterstrom zurückgehalten oder abgebremst wird.

4. Verfahren nach Anspruch 3, **dadurch gekennzeichnet, dass** nach Ausbildung der Lücke (4') das Rückhalteelement (16) zur weiteren Abstützung des auf die Lücke (4') folgenden Behälters (4) wieder auf die Transportgeschwindigkeit der Transportstrecke beschleunigt wird.

5. Verfahren nach einem der Ansprüche 1 - 4, dass das Rückhalteelement (16) nach der Ausbildung der Lücke (4') oder nach der anschließenden nochmaligen Beschleunigung der Bewegung des Rückhalteelementes (16) auf die Geschwindigkeit der Transportstrecke (6) in die Ausgangspositionen zurückbewegt wird.

6. Verfahren nach einem der vorhergehenden Ansprüche, **dadurch gekennzeichnet, dass** bei Ausbildung der Lücke (4') der dieser Lücke im Behälterstrom vorausgehende Behälter (4) durch ein mit dem Behälterstrom mitgeführtes Abstützelement (16a) abgestützt wird, und zwar vorzugsweise bis an den Einlauf der Einrichtung (7).

7. Verfahren nach Anspruch 6, **dadurch gekennzeichnet, dass** das Abstützelement (16a) zwischen einer Ausgangsposition, in der es außerhalb der Bewegungsbahn der Behälter (4) auf der Transportstrecke (6) angeordnet ist und einer Abstützposition bewegbar ist, in der es gegen den der auszubildenden oder ausgebildeten Lücke (4') vorausgehenden Behälter (4) zu dessen Abstützung anliegt und in Transportrichtung (B) der Transportstrecke (6) synchron mit dieser bewegt wird.

8. Behälterbehandlungsmaschine zum Behandeln von Behältern (4), mit mehreren an einem umlaufenden Transportelement (2) gebildeten und in einem Teilungsabstand von einander angeordneten Behandlungspositionen (3) und mit einem eine Transportstrecke (6) aufweisenden Behältereinlauf (5) zum Zuführen der Behälter (4) jeweils einzeln an eine Behandlungsposition (3), wobei die Behälter auf der Transportstrecke (6) des Behältereinlauf (5) einen Behälterstrom derart bilden, dass die Position jedes Behälters in dem Behälterstrom einer bestimmten Behandlungsposition (3) am Transportelement (2) zugeordnet ist,
wobei wenigstens ein Rückhalteelement (16), mit dem zur Vermeidung der Übergabe von Behältern (4) an wenigstens eine von einer Behälterbehandlung ausgeschlossenen, mit einem Behälter (4) nicht zu belegenden Behandlungsposition (3) jeweilige der dieser Behandlungsposition (3) durch seine Position im Behälterstrom zugeordnete Behälter (4) an der Transportstrecke (6) zur Ausbildung einer wenigstens einem Behälter entsprechenden Lücke (4') in dem Behälterstrom zurückgehalten wird, sodass der betreffende Behälter an eine Behandlungsposition (3) übergeben wird, die in Transportrichtung (A) des Transportelementes (2) auf die wenigstens eine nicht zu belegende Behandlungsposition (3) nachfolgt, wobei das wenigstens eine Rückhalteelementes (16) aus einer Ausgangsposition außerhalb der Bewegungsbahn der Behälter (4) auf der Transportstrecke (6) in eine Rückhalteposition bewegbar ist, in der es den bezogen auf die Transportrichtung (B) der Transportstrecke (6) auf die zu bildende Lücke (4') folgenden Behälter (4) und die diesem folgenden Behälter (4) des Behälterstrom zumindest bis zur vollständigen Ausbildung dieser Lücke (4') zurückhält oder abbremst, **gekennzeichnet,**
**durch** eine Steuereinrichtung (13), mit der das wenigstens eine Rückhalteelement (16) derart steuerbar ist, dass es nach Ausbildung der Lücke (4') in seiner Rückhalteposition verblieben mit dem Behälterstrom auf der Transportstrecke (6) unter Abstützung des Behälters (4) mitbewegt wird, der bezogen auf die Transportrichtung (B) der Transportstrecke (6) auf die Lücke folgt, und zwar bis an einen Bereich eines Einlaufs einer Einrichtung (7), mit der die Behälter (4) auf einen dem Teilungsabstand der Behandlungspositionen (3) entsprechenden Behälterabstand gebracht werden.

9. Behälterbehandlungsmaschine nach Anspruch 8 , **gekennzeichnet durch** eine Steuereinrichtung (13), mit der das wenigstens eine Rückhalteelement (16) derart steuerbar ist, dass es zurAusbildung der jeweiligen Lücke (4') aus einer Ausgangsposition zunächst in Transportrichtung (B) der Transportstrecke (6) auf die Transportgeschwindigkeit dieser Transportstrecke beschleunigt, anschließend in seine Rückhalteposition bewegt wird, und dass dann zur Ausbildung der Lücke (4') die Bewegung des Rückhalteelementes (16) verlangsamt und dadurch zur Ausbildung der Lücke (4') der im Behälterstrom auf die Lücke (4') folgende Behälter und der an diesen anschließende Behälterstrom zurückgehalten oder abgebremst wird.

10. Behälterbehandlungsmaschine nach Anspruch 9, **gekennzeichnet durch** eine Steuereinrichtung (13), mit der das wenigstens eine Rückhalteelement (16) derart steuerbar ist, dass es nach Ausbildung der Lücke (4') zur weiteren Abstützung des auf die Lücke (4') folgenden Behälters (4) wieder auf die Transportgeschwindigkeit der Transportstrecke beschleunigt wird.

11. Behälterbehendlungsmaschine nach einem der Ansprüche 8 - 10, **gekennzeichnet durch** eine Steuereinrichtung (13), mit der das wenigstens eine Rückhalteelement (16) derart steuerbar ist, dass es nach der Ausbildung der Lücke (4') oder nach der anschließenden nochmaligen Beschleunigung der Bewegung des Rückhalteelementes (16) auf die Geschwindigkeit der Transportstrecke (6) in die Ausgangspositionen zurückbewegt wird.

12. Behälterbehandlungsmaschine nach einem der vorhergehenden Ansprüche, **gekennzeichnet durch** ein mit dem Behälterstrom mitgeführtes Abstützelement (16a), mit dem der der Lücke (4') im Behälterstrom vorausgehende Behälter (4) abgestützt wird.

13. Behälterbehandlungsmaschine nach einem der vorhergehenden Ansprüche, **dadurch gekennzeichnet, dass** das Rückhaltelement (16) auf einem Schlitten (17) angeordnet ist, der zwischen einer der Ausgangsposition des Rückhalteelementes (16) entsprechenden ersten Position und einer zweiten Position parallel zur Transportrichtung (B) der Transportstrecke in einem der Mitführbewegung entsprechenden Vorhub und einem Rückhub bewegbar ist, und dass das Rückhalteelement (16) auf dem Schlitten (17) zwischen einer ersten Position außerhalb der Bewegungsbahn des Behälterstromes und einer zweiten Position bewegbar ist, in der das Rückhalteelement (16) in die Bewegungsbahn des Behälterstroms hineinreicht.

## Claims

1. Method for processing containers (4) in a container processing machine (1) comprising a plurality of processing positions (3) formed along a circulating conveyor element (2) and arranged at a spacing from each other, and with a container feed (5) having a conveying path (6) for individually feeding the containers (4) to a processing position (3), wherein the containers on the conveying path (6) of the container feed (5) form a flow of containers in such a way that the position of each container in the flow of containers is associated with a defined processing position (3) on the conveyor element (2),
with which, in order to avoid the transfer of containers (4), at least at one processing position (3), excluded from container processing and not to be occupied by a container (4), the respective container (4) associated with this processing position (3) due to its position in the flow of containers, is held back on the conveying path (6) in order to form a gap (4'), corresponding to at least one container, in the flow of containers, such that the container (4) concerned is transferred to a processing position (3), which, in the conveying direction (A) of the conveying element (2), follows on the at least one processing position (3) which is not to be occupied,
wherein the formation of the gap (4') takes place by the use of at least one retention element (16), which can be moved out of a starting position, outside the trajectory of the containers (4) on the conveying path (6), into a retention position, in which it retains or brakes the container (4) following the gap (4') which is to be formed, related to the conveying direction (B) of the conveying path (6), and also the containers (4) following this in the flow of containers, at least until the complete formation of this gap (4'),
**characterised in that**
the retention element (16), located in its retention position, and after the formation of the gap (4'), is moved together with the flow of containers on the conveying path (6), with the support of the container (4) following the gap, related to the conveying direction (B) of the conveying path (6), and specifically as far as a region of an inlet of a device (7), with which the containers (4) are brought to a container spacing which corresponds to the division spacing of the processing positions (3).

2. Method according to claim 1, **characterised in that** the at least one processing position which is not to be occupied is a distorted or dirt contaminated or defective processing position (3).

3. Method according to claim 1 of 2, **characterised in that**, in order to form the respective gap (4'), the retention element (16) is moved out of an initial position initially in the conveying direction (B) of the conveying path (6), speeded up to the conveying speed of this conveying path, then moved into its retention position, and that, in order to form the gap (4'), the forwards movement of the retention element (16) is then slowed, and thereby, in order to form the gap (4'), the container following the gap in the flow of containers, and the flow of containers following this, is retained or slowed.

4. Method according to claim 3, **characterised in that**, after the formation of the gap (4'), in order to provide further support for the container (4) following the gap (4'), the retention element (16) is speeded up again to the conveying speed of the conveying path.

5. Method according to any one of claims 1 - 4, **characterised in that**, after the formation of the gap (4') or after the subsequent repeated speeding up of the movement of the retention element (16) to the speed of the conveying path (6), the retention element (16) is moved back into the initial position.

6. Method according to any one of the preceding claims, **characterised in that**, at the formation of the gap (4'), the container (4) preceding this gap in this flow of containers is supported by a support element (16a) which is conveyed with the stream of containers, and preferably as far as the inlet of the device (7).

7. Method according to claim 6, **characterised in that** the support element (16a) can be moved between an initial position, in which it is arranged outside the trajectory of the containers (4) on the conveying path (6), and a support position, in which it is in contact against the container (4), preceding the gap (4') which is to be formed or formed, in order to support it, and is moved in synchrony with it in the conveying direction (B) of the conveying path (6).

8. Container processing machine for processing containers (4), with a plurality of processing positions (3) formed on a circulating conveying element (2) and arranged at a spacing from each other, and with a container feed (5) having a conveying path (6) for individually feeding the containers (4) to a processing position (3), wherein the containers on the conveying path (6) of the container feed (5) form a flow of containers, in such a way that the position of each container in the flow of containers is associated with a defined processing position (3) on the conveyor element (2), wherein at least one retention element (16), with which, in order to avoid the transfer of containers (4), at least at one processing position (3), excluded from container processing and not to be occupied by a container (4), the respective container (4) associated with this processing position (3) due to its position in the flow of containers, is held back on the conveying path (6) in order to form a gap (4'), corresponding to at least one container, in the flow of containers, such that the container concerned is transferred to a processing position (3), which, in the conveying direction (A) of the conveying element (2), follows on the at least one processing position (3) which is not to be occupied, wherein the at least one retention element (16) can be moved out of an initial position outside the trajectory of the containers (4) on the conveying path (6) into a retention position, in which it retains or brakes the container (4) following the gap (4') which is to be formed, related to the conveying direction (B) of the conveying path (6), and also the containers (4) following this in the flow of containers, at least until the complete formation of this gap (4'),
**characterised by**
a control device (13), with which the at least one retention element (16) can be controlled in such a way that, after the formation of the gap (4'), remaining in its retention position, it is moved with the flow of containers on the conveying path (6) with the support of the container (4) following the gap, related to the conveying direction (B) of the conveying path (6), and specifically as far as a region of an inlet of a device (7), with which the containers (4) are brought to a container spacing which corresponds to the division spacing of the processing positions (3).

9. Container processing machine according to claim 8, **characterised by** a control device (13), with which the at least one retention element (16) can be controlled in such a way that, in order to form the respective gap (4'), it accelerates out of an initial position, initially in the conveying direction (B) of the conveying path (6), up to the conveying speed of this conveying path, then moves into its retention position, and that, for the formation of the gap (4'), the movement of the retention element (16) is slowed, and thereby, to form the gap (4'), the container following the gap (4') in the flow of containers, and the container flow following this, is retained or braked.

10. Container processing machine according to claim 8, **characterised by** a control device (13) with which the at least one retention element (16) can be controlled in such a way that, after the formation of the gap (4'), for the further support of the container (4) following the gap (4'), it is speeded up again to the conveying speed of the conveying path.

11. Container processing machine according to any one of claims 8-10, **characterised by** a control device (13), with which the at least one retention element (16) can be controlled in such a way that, after the formation of the gap (4') or after the subsequent repeated acceleration of the movement of the retention element (16) to the speed of the conveying path (6), it is moved back into the initial positions.

12. Container processing machine according to any one of the preceding claims, **characterised by** a support element (16a) which is conveyed together with the flow of containers, with which the container (4) is supported, preceding the gap (4') in the flow of containers.

13. Container processing machine according to any one of the preceding claims, **characterised in that** the retention element (16) is arranged on a carriage (17), which can be moved between a first position, corresponding to an initial position of the retention element (16), and a second position parallel to the conveying direction (B) of the conveying path, in a stroke movement corresponding to the conjoint movement and a return stroke, and that the retention element (16) can be moved on the carriage (17) between a first position outside the trajectory of the flow of containers and a second position, in which the retention element (16) extends into the trajectory of the flow of containers.

## Revendications

1. Procédé de traitement de récipients (4) dans une machine de traitement de récipient (1) avec plusieurs positions de traitement (3) agencées dans une distance de séparation les unes des autres et formées sur un élément de transport tournant (2) et avec une entrée de récipient (5) présentant une voie de transport (6) pour l'alimentation des récipients (4) respectivement individuellement sur une position de traitement (3), dans lequel les récipients forment sur la voie de transport (6) de l'entrée de récipient (5) un courant de récipients de telle manière que la position de chaque récipient dans le courant de récipients soit associée à une position de traitement (3) déterminée sur l'élément de transport (2),
pour lequel pour éviter la remise de récipients (4) sur au moins une position de traitement (3) à ne pas occuper avec un récipient (4), exclue d'un traitement de récipient, le récipient (4) respectif associé à cette position de traitement (3) par sa position dans le courant de récipients est retenu sur la voie de transport (6) pour la réalisation d'un vide (4') correspondant à au moins un récipient dans le courant de récipients de sorte que le récipient concerné (4) soit remis sur une position de traitement (3) qui suit dans le sens de transport (A) de l'élément de transport (2) l'au moins une position de traitement (3) à ne pas occuper,
pour lequel la réalisation du vide (4') est effectuée en utilisant au moins un élément de retenue (16) qui est mobile d'une position de départ en dehors de la bande de déplacement des récipients (4) sur la voie de transport (6) à une position de retenue, dans laquelle il retient ou freine le récipient (4) suivant le vide (4') à former par rapport au sens de transport (B) de la voie de transport (6) et les récipients (4) suivant celui-ci du courant de récipients au moins jusqu'à la réalisation complète de ce vide (4'),
**caractérisé en ce**
**que** l'élément de retenue (16) se trouvant dans sa position de retenue est déplacé après la réalisation du vide (4') avec le courant de récipients sur la voie de transport (6) sous appui du récipient (4) qui suit par rapport au sens de transport (B) de la voie de transport (6) le vide, et ce jusqu'à une zone d'une entrée d'un dispositif (7) avec lequel les récipients (4) sont fournis sur une distance de récipient correspondant à la distance de séparation des positions de traitement (3).

2. Procédé selon la revendication 1, **caractérisé en ce que** l'au moins une position de traitement à ne pas occuper est une position de traitement (3) perturbée ou salie ou défectueuse.

3. Procédé selon la revendication 1 ou 2, **caractérisé en ce que** pour la réalisation du vide respectif (4'), l'élément de retenue (16) accélère de sa position de départ tout d'abord dans le sens de transport (B) de la voie de transport (6) à la vitesse de transport de cette voie de transport puis est déplacé dans sa position de retenue et que le mouvement avant de l'élément de retenue (16) ralentit ensuite pour la réalisation du vide (4') et ainsi pour la réalisation du vide (4') le récipient suivant le vide dans le courant de récipients et le courant de récipients se raccordant à celui-ci est retenu ou freiné.

4. Procédé selon la revendication 3, **caractérisé en ce qu'**après la réalisation du vide (4') l'élément de retenue (16) est accéléré pour la suite de l'appui du récipient (4) suivant le vide (4') de nouveau à la vitesse de transport de la voie de transport.

5. Procédé selon l'une des revendications 1 à 4, **caractérisé en ce que** l'élément de retenue (16) est redéplacé après la réalisation du vide (4') ou après la nouvelle accélération suivante du mouvement de l'élément de retenue (16) à la vitesse de la voie de transport (6) dans les positions de départ.

6. Procédé selon l'une des revendications précédentes, **caractérisé en ce que** pour la réalisation du vide (4'), le récipient (4) précédant ce vide dans le courant de récipients est en appui par un élément d'appui (16a) entraîné avec le courant de récipients, et ce de préférence jusqu'à l'entrée du dispositif (7).

7. Procédé selon la revendication 6, **caractérisé en ce que** l'élément d'appui (16a) est mobile entre une position de départ dans laquelle il est agencé en dehors de la bande de déplacement des récipients (4) sur la voie de transport (6) et une position d'appui dans laquelle il repose contre le récipient (4) précédant le vide (4') à réaliser ou réalisé pour son appui et est déplacé dans le sens de transport (B) de la voie de transport (6) de manière synchrone avec celui-ci.

8. Machine de traitement de récipient pour le traitement de récipients (4), avec plusieurs positions de traitement (3) agencées dans une distance de séparation les unes des autres et formées sur un élément de transport tournant (2) et avec une entrée de récipient (5) présentant une voie de transport (6) pour l'alimentation des récipients (4) respectivement individuellement sur une position de traitement (3), dans lequel les récipients forment sur la voie de transport (6) de l'entrée de récipient (5) un courant de récipients de telle manière que la position de chaque récipient dans le courant de récipients soit associée à une position de traitement (3) déterminée sur l'élément de transport (2),
dans laquelle au moins un élément de retenue (16) avec lequel pour éviter la remise de récipients (4) sur au moins une position de traitement (3) à ne pas occuper avec un récipient (4), exclue d'un traitement de récipient, le récipient (4) respectif associé à cette position de traitement (3) par sa position dans le courant de récipients est retenu sur la voie de transport (6) pour la réalisation d'un vide (4') correspondant à au moins un récipient dans le courant de récipients de sorte que le récipient concerné soit remis sur une position de traitement (3) qui suit dans le sens de transport (A) de l'élément de transport (2) sur l'au moins une position de traitement (3) à ne pas occuper, dans lequel l'au moins un élément de retenue (16) est mobile d'une position de départ en dehors de la bande de déplacement des récipients (4) sur la voie de transport (6) dans une position de retenue dans laquelle il retient ou freine le récipient (4) suivant par rapport au sens de transport (B) de la voie de transport (6) le vide (4') à former et les récipients (4) suivant celui-ci du courant de récipients au moins jusqu'à la réalisation complète de ce vide (4'),
**caractérisé**
**par** un dispositif de commande (13) avec lequel l'au moins un élément de retenue (16) peut être commandé de telle manière qu'il soit déplacé après la réalisation du vide (4') resté dans sa position de retenue avec le courant de récipients sur la voie de transport (6) sous appui du récipient (4) qui suit par rapport au sens de transport (B) de la voie de transport (6) le vide, et ce jusqu'à une zone d'une entrée d'un dispositif (7) avec lequel les récipients (4) sont amenés sur une distance de récipient correspondant à la distance de séparation des positions de traitement (3).

9. Machine de traitement de récipient selon la revendication 8, **caractérisée par** un dispositif de commande (13) avec lequel l'au moins un élément de retenue (16) peut être commandé de telle manière qu'il accélère pour la réalisation du vide respectif (4') d'une position de départ tout d'abord dans le sens de transport (B) de la voie de transport (6) à la vitesse de transport de cette voie de transport puis est déplacé dans sa position de retenue, et que le mouvement de l'élément de retenue (16) est ralenti ensuite pour la réalisation du vide (4') et ainsi pour la réalisation du vide (4') le récipient suivant le vide (4') dans le courant de récipients et le courant de récipients se raccordant à celui-ci est retenu ou freiné.

10. Machine de traitement de récipient selon la revendication 9, **caractérisée par** un dispositif de commande (13) avec lequel l'au moins un élément de retenue (16) est commandable de telle manière qu'il soit accéléré après la réalisation du vide (4') pour la suite de l'appui du récipient (4) suivant le vide (4') de nouveau à la vitesse de transport de la voie de transport.

11. Machine de traitement de récipient selon l'une des revendications 8 à 10, **caractérisée par** un dispositif de commande (13) avec lequel l'au moins un élément de retenue (16) est commandable de telle manière qu'il soit redéplacé après la réalisation du vide (4') ou après la nouvelle accélération suivante du mouvement de l'élément de retenue (16) à la vitesse de la voie de transport (6) dans les positions de départ.

12. Machine de traitement de récipient selon l'une des revendications précédentes, **caractérisée par** un élément d'appui (16a) entraîné avec le courant de récipients avec lequel le récipient (4) précédant le vide (4') dans le courant de récipients est en appui.

13. Machine de traitement de récipient selon l'une des revendications précédentes, **caractérisée en ce que** l'élément de retenue (16) est agencé sur un chariot (17) qui est mobile entre une première position correspondant à la position de départ de l'élément de retenue (16) et une seconde position parallèlement au sens de transport (B) de la voie de transport dans une course avant et une course arrière correspondant au mouvement d'entraînement, et **en ce que** l'élément de retenue (16) est mobile sur le chariot (17) entre une première position en dehors de la bande de déplacement du courant de récipients et une seconde position dans laquelle l'élément de retenue (16) parvient dans la bande de déplacement du courant de récipients.
